# EUROPÄISCHE PATENTSCHRIFT

(11) **EP 3 854 635 B1**
(45) Veröffentlichungstag und Bekanntmachung des Hinweises auf die Patenterteilung: **21.06.2023**
(21) Anmeldenummer: 20210979.9
(22) Anmeldetag: 01.12.2020
(51) Int. Cl.: B60R 1/06, B60R 1/12, B62J 29/00

(54) **RÜCKSPIEGEL FÜR EIN EINSPURIGES KRAFTFAHRZEUG**
REAR VIEW MIRROR FOR A TWO-WHEELED VEHICLE
RÉTROVISEUR POUR DEUX-ROUES

(30) Priorität: 21.01.2020 DE 102020101252
(43) Veröffentlichungstag der Anmeldung: 28.07.2021
(73) Patentinhaber: Bayerische Motoren Werke Aktiengesellschaft, 80809 München (DE)
(72) Erfinder: Schlayer, Andreas, 81547 München (DE)

(56) Entgegenhaltungen:
- EP-A1- 2 463 156
- WO-A1-2017/084790
- DE-A1-102011 015 148
- US-A1- 2009 073 704
- US-A1- 2009 316 285
- US-A1- 2010 195 340
- US-A1- 2012 099 335
- US-A1- 2012 200 428
- US-B1- 7 717 596

## Beschreibung

Die Erfindung betrifft einen Rückspiegel für ein einspuriges Kraftfahrzeug mit einem Spiegelarm und einem Gehäuse, sowie ein einspuriges Kraftfahrzeug mit dem Rückspiegel.

Im Anschluss an eine Fahrt mit einem Motorrad oder einem Roller kann ein Fahrer das Bedürfnis empfinden in einen Spiegel zu sehen, um nach dem Abnehmen des Helms die Frisur oder das Makeup zu überprüfen. Insbesondere nach einer Nachtfahrt wird hierfür jedoch eine externe Lichtquelle zum Ausleuchten des Gesichts des Fahrers benötigt. Überdies weisen bekannte Lösungen mit einer zusätzlichen Lichtquelle eine Reihe von Nachteilen auf. Beispielsweise werden Lösungen offenbart, bei der eine zusätzliche Lichtquelle über einen zusätzlichen Schalter betätigt werden muss. Hierfür ist ein gesonderter Schalter für das Ein- und Ausschalten des Lichts nötig. Weitere Schalter im Bereich des Lenkers erhöhen jedoch die Komplexität des Lenkers bzw. der Schaltelemente in einem ungewünschten Maß und erscheinen an anderen Positionen unzweckmäßig/kompliziert.

Darüber hinaus sind bei einem einspurigen Kraftfahrzeug die Möglichkeiten stark eingeschränkt, Warnsignale an einen Fahrer oder weitere Verkehrsteilnehmer zu senden.

Druckschriftlicher Stand der Technik im vorliegenden technischen Gebiet, welcher den Oberbegriff des Anspruchs 1 widerspiegelt, ist in den Dokumenten US 2009/073 704 A1, WO 2017/084 790 A1 und US 2012/099 335 A1 offenbart.

Es ist daher Aufgabe der vorliegenden Erfindung, einen Rückspiegel für ein einspuriges Kraftfahrzeug, sowie ein einspuriges Kraftfahrzeug mit dem Rückspiegel bereitzustellen, der bei Nacht/im Dunklen automatisch für ein Spiegelbild des Fahrers genutzt werden kann und Warnsignale an einen Fahrer oder weitere Verkehrsteilnehmer ermöglicht.

Diese Aufgabe wird durch die Merkmalskombination gemäß Patentanspruch 1 gelöst.

Erfindungsgemäß wird ein Rückspiegel für ein einspuriges Kraftfahrzeug mit einem Spiegelarm und einem Gehäuse vorgeschlagen. Ein erstes freies Ende des Spiegelarms ist zur Befestigung des Rückspiegels an einem einspurigen Kraftfahrzeug ausgebildet und das Gehäuse ist an einem zweiten freien Ende des Spiegelarms angeordnet. Ferner ist der Rückspiegel elektrifiziert und umfasst eine Leuchte. Das Gehäuse verfügt über einen Spiegel. Außerdem ist an dem Rückspiegel eine Schnittstelle für ein Steuergerät eines einspurigen Kraftfahrzeugs vorgesehen und die Leuchte ist mittels des Steuergeräts steuerbar.

Auf diese Weise kann eine in einen oder beide Seitenspiegel eingebaute Beleuchtung umgesetzt werden, mit deren Hilfe der Spiegel nachts als beispielsweise Schminkspiegel genutzt werden kann, um z.B. nach dem Abnehmen des Helms die Frisur oder das Makeup zu prüfen. Dabei ist der Fahrer nicht auf eine zusätzliche externe Lichtquelle angewiesen. Aufgrund der Steuerung bzw. Regelung des Lichts mittels des Steuergeräts erfolgt ein automatisches Ein- bzw. Ausschalten des Lichts, ohne dass ein Eingreifen des Fahrers nötig ist. Darüber hinaus kann mittels einer geeigneten Anordnung und Ausrichtung der Leuchte ein Warnsignal an den Fahrer bzw. an weitere Verkehrsteilnehmer gesendet werden.

In einer vorteilhaften Ausführungsvariante ist vorgesehen, dass die Leuchte zur Erzeugung verschiedener Farben ausgebildet ist. Dabei ist günstig, dass die Farbe der Leuchte an den jeweiligen Anwendungsfall angepasst werden kann. Bei der Verwendung als Schminkspiegel wird beispielsweise ein helles/weißes Licht genutzt und bei einem Warnsignal ein rotes oder orangenes Licht. Hierfür sind Leuchtdioden besonders geeignet, da auf eine bauraumsparende und energiesparende Weise eine Lichtquelle mit ausreichender Intensität bereitgestellt wird.

Vorzugsweise ist der Rückspiegel derart ausgebildet, dass mittels der Leuchte verschiedene geometrische Formen darstellbar sind, vorzugsweise ein Dreieck, ein Viereck oder ein Kreis. Vorteilhaft daran ist, dass die dargestellte geometrische Form den Effekt der Leuchte verstärkt. Ein kreisförmiges Licht ist zum Beispiel bei der Verwendung des Rückspiegels als Schminkspiegel geeignet, wogegen ein Dreieck für die Darstellung eines Warnsignals besonders günstig ist, da diese Form den Fahrer an ein Warnschild erinnert. Besonders vorteilhaft ist die Darstellung der verschiedenen Geometrien mittels einer Leuchte, die mit einer LED-Anordnung je nach Anwendung unterschiedliche Symbole darstellt.

Erfindungsgemäß ist vorgesehen, dass der Spiegelarm zur Montage an einem Lenker eines einspurigen Kraftfahrzeugs ausgebildet ist. Auf diese Weise lässt sich die Variante eines lenkerfesten Rückspiegels umsetzen.

In einer nicht erfindungsgemäßen Ausführung ist die Leuchte in dem Spiegelarm angeordnet. Vorteilhaft daran ist, dass der Spiegelarm eine besonders geeignete Position für die Anordnung der Leuchte ist, da die stromführenden Leitungen des elektrifizierten Rückspiegels durch den Spiegelarm verlaufen und somit der Anschluss der Leuchte an eine stromführende Leitung ohne einer Änderung der Konstruktion bzw. der Verläufe der Leitungen umgesetzt werden kann. Außerdem kann an dem Spiegelarm eine die Leuchte überdeckende und verschiebbare oder klappbare Abdeckung zum Schutz der Leuchte vor Umwelteinflüssen angebracht werden.

Ferner ist erfindungsgemäß vorgesehen, dass die Leuchte zwischen einem Außenrand des Spiegels bzw. einem Spiegelglas des Spiegels und einer Kante des Gehäuses angeordnet ist und sich entlang der Kante vollständig um den Spiegel erstreckt. Diese Anordnung ist besonders für eine Anwendung als Schminkspiegel geeignet, da ein Gesicht bzw. Kopf des Fahrers optimal ausgeleuchtet werden kann, weil sich die Lichtquelle direkt in einer Blickrichtung des Fahrers zum Spiegel befindet.

Der Rückspiegel ist in einer nicht erfindungsgemäßen Ausführungsvariante ausgebildet, dass die Leuchte in dem Gehäuse und hinter einer reflektierenden Schicht des Spiegels angeordnet ist. Dadurch lassen sich neben einem Ausleuchten des Gesichts bzw. Kopfes eines Fahrers auch Symbole auf dem Spiegel darstellen, die zur Anzeige der Warnsignale dienen.

Erfindungsgemäß wird ferner ein einspuriges Kraftfahrzeug mit einem Rückspiegel, der entsprechend der vorstehenden Merkmale ausgebildet ist, und einem Steuergerät vorgeschlagen, in dem Daten zur Steuerung der Leuchte hinterlegt sind. Die in dem Steuergerät hinterlegten Daten umfassen Ein- bzw. Ausschaltbedingungen für die Leuchte. Vorteilhaft daran ist, dass der Fahrer die Leuchte nicht betätigen muss, sondern dies automatisch erfolgen kann. Die Ein- bzw. Ausschaltbedingungen für die Leuchte können je nach Anwendungsfall verschiedenste Parameter aufweisen. Grundsätzlich sind die wesentlichen Größen für eine Einschaltbedingung bei einer Anwendung als Schminkspiegel die Geschwindigkeit, der Status der Zündung (an/aus), der Status der Lenkradsperre (an/aus) und die verstrichene Zeit nach einem Abstellen des Motorrads bzw. Ausschalten der Zündung des Motorrads. Eine Ausschaltbedingung ist dabei beispielsweise ein bestimmtes Zeitintervall bzw. eine Änderung der vorstehend genannten Größen. Bei der Nutzung für ein Warnsignal können Einschaltbedingungen beispielsweise Fahrzeuge in einem toten Winkel des Rückspiegels oder die Detektion eines Unfalls sein. Sind die Bedingungen erfüllt, schaltet sich die Leuchte ein. Sobald der entsprechende Parameter die Bedingung nicht mehr erfüllt ist, wird die Leuchte von dem Steuergerät ausgeschaltet. Darüber hinaus ist günstig, dass entweder ein zusätzliches Steuergerät in das einspurige Kraftfahrzeug integriert ist oder auf ein bereits vorhandenes Steuergerät, wie beispielsweise das Motorsteuergerät oder das ABS-Steuergerät, zurückgegriffen wird.

Weiter vorteilhaft ist es, wenn die in dem Steuergerät hinterlegten Daten eine der jeweiligen Ein- bzw. Ausschaltbedingungen zugeordnete Farbe umfasst. Dadurch leuchtet die Leuchte in einer für den jeweiligen Anwendungsfall optimal geeigneten Farbe. Bei der Verwendung als Schminkspiegel wird beispielsweise ein helles/weißes Licht genutzt und bei einem Warnsignal ein rotes oder orangenes Licht.

In einer alternativen Ausführung des vorliegenden einspurigen Kraftfahrzeugs ist ferner vorgesehen, dass die in dem Steuergerät hinterlegten Daten eine der jeweiligen Ein- bzw. Ausschaltbedingungen zugeordnete geometrische Form umfasst. Die entsprechend ausgewählte geometrische Form für den jeweiligen Anwendungsfall verstärkt die Wirkung der Leuchte.

In einer bevorzugten Ausführungsform der Erfindung umfassen die in dem Steuergerät hinterlegten Daten eine einer jeweiligen Ein- bzw. Ausschaltbedingung zugeordnete Dauer des Leuchtens der Leuchte. Vorteilhaft daran ist, dass die Leuchte dem jeweiligen Anwendungsfall entsprechend mit einer bestimmten Dauer leuchtet, sodass auf der einen Seite eine ausreichende Dauer für beispielsweise den Anwendungsfall als Schminkspiegel gewährleistet ist und auf der anderen Seite ein dauerhaftes Leuchten der Leuchte vermieden wird.

In einem vorteilhaften Ausführungsbeispiel ist vorgesehen, dass die in dem Steuergerät hinterlegten Daten ein einer jeweiligen Ein- bzw. Ausschaltbedingungen zugeordnetes Intervall, das ein aufeinanderfolgendes Ein- bzw. Ausschalten der Leuchte hinsichtlich einer Dauer und einer Anzahl an Wiederholungen regelt. Dabei ist günstig, dass beispielsweise ein Blinken der Leuchte umgesetzt werden kann, falls sich ein weiterer Verkehrsteilnehme in einem toten Winkel des Rückspiegels befindet, um den Fahrer zu warnen. Dabei sind verschiedene Kombinationen von Leuchtdauer und Anzahl an Wiederholungen möglich, wodurch die Wirkung der Leuchte als ein Warnsignal gesteigert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines nicht erfindungsgemäßen Rückspiegels für ein Kraftfahrzeug,
- Fig. 2: eine perspektivische Ansicht einer eines Rückspiegels für ein einspuriges Kraftfahrzeug,
- Fig. 3: eine perspektivische Ansicht einer weiteren nicht erfindungsgemäßen Ausführung eines Rückspiegels für ein einspuriges Kraftfahrzeug.

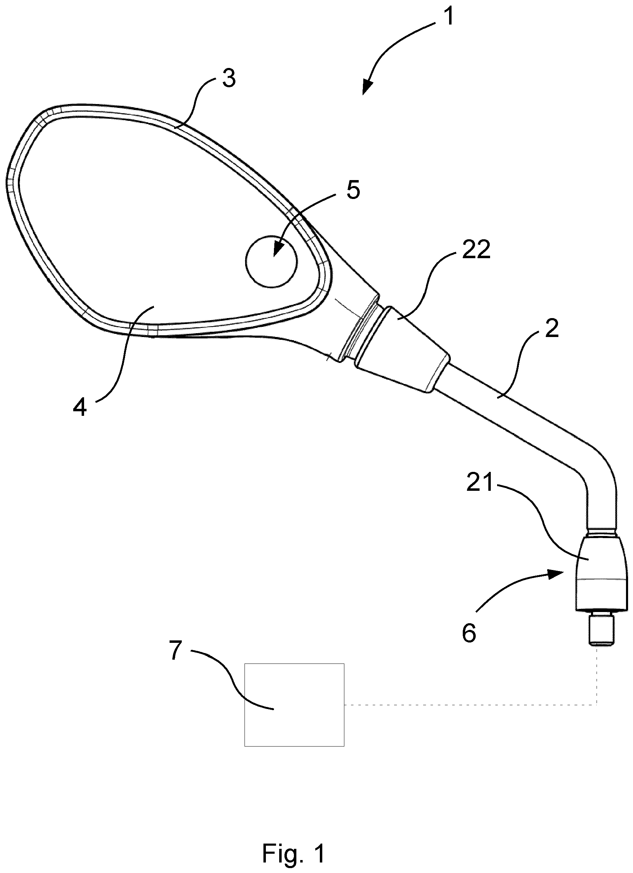

In Figur 1 ist eine perspektivische Ansicht eines nicht erfindungsgemäßen Rückspiegels 1 für ein einspuriges Kraftfahrzeug mit einem Spiegelarm 2 und einem Gehäuse 3 dargestellt. Mittels des rohrförmigen Spiegelarms 2 ist der Rückspiegel 1 an einem Lenker eines einspurigen Kraftfahrzeugs montierbar. Hierfür weist der Spiegelarm 2 ein erstes freies Ende 21 auf, das zylinderförmig ausgebildet ist und einen größeren Durchmesser besitzt als der rohrförmige Bereich. An dem ersten freien Ende 21 ist eine Schnittstelle 6 für ein Steuergerät 7 eines einspurigen Kraftfahrzeugs vorgesehen, über die der Rückspiegel 1 elektrifiziert ist. Der rohrförmige Spiegelarm 2 verlängert zunächst das erste freie Ende 21, ist dann um ungefähr 30 ° abgewinkelt und erstreckt sich anschließend geradlinig bis zu einem zweiten freien Ende 22, an dem das Gehäuse 3 der Rückspiegels 1 angeordnet ist. Das Gehäuse 3 ist oval ausgebildet und umrandet einen Spiegel 4, der in dem Gehäuse 3 aufgenommen ist. Dabei ist eine reflektierende Schicht des Spiegels 4 von dem Gehäuse 1 abgewandt.

Darüber hinaus umfasst der Rückspiegel 1 eine Leuchte 5, die in dem Gehäuse 3 und hinter der reflektierenden Schicht des Spiegels 4 angeordnet ist. Die Leuchte 5 umfasst eine oder mehrere Leuchtdioden zur Erzeugung verschiedener Farben und bildet in Figur 1 einen Kreis ab. Die Ausrichtung der Leuchte 5 ist derart justiert, dass ein Fahrer, der neben einem Fahrersitz des parkenden Motorrads steht, ausgeleuchtet wird. Sollte die Leuchte 5 nicht auf diese Weise ausgerichtet sein, ist die Ausrichtung mittels einem entsprechend hierfür ausgelegten Spiel an dem ersten und dem zweiten freien Ende 21, 22 einstellbar. Ferner ist die Leuchte 5 mittels des Steuergeräts 7 über die Schnittstelle 6 automatisch steuerbar.

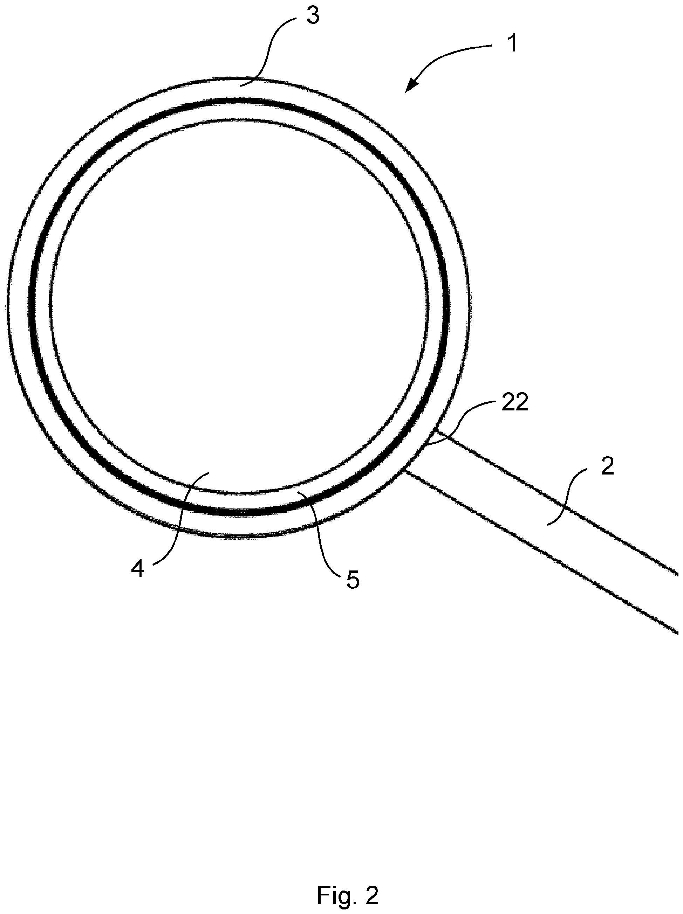

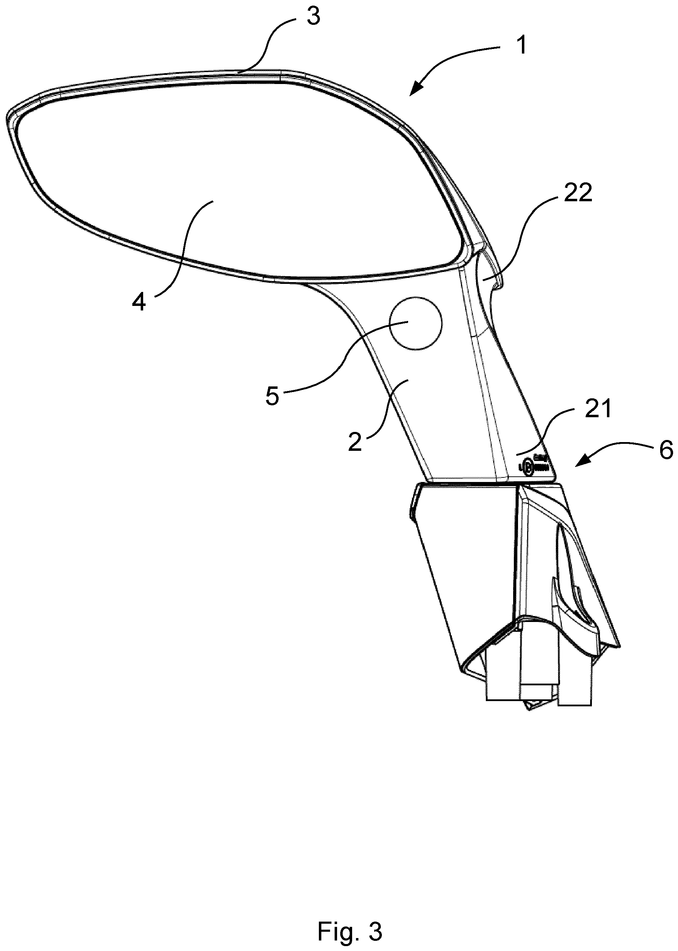

Figur 2 und 3 zeigen eine perspektivische Ansicht einer jeweils weiteren Ausführung eines Rückspiegels 1 für ein einspuriges Kraftfahrzeug. Nachdem die wesentlichen Merkmale der alternativen Ausführungen mit der in Figur 1 beschriebenen Ausführung übereinstimmen, wird im Folgenden lediglich auf die Unterschiede eingegangen.

In der in Figur 2 dargestellten erfindungsgemäßen Ausführung des Rückspiegels 1 ist an dem zweiten freien Ende 22 des rohrförmigen Spiegelarms 2 ein rundes Gehäuse 3 angeordnet, das einen ebenfalls runden Spiegel 4 umrandet, der in dem Gehäuse 3 aufgenommen ist. Die Leuchte 5 ist zwischen einem Außenrand des Spiegels 4 und einer Kante des Gehäuses 3 angeordnet und erstreckt sich entlang der Kante vollständig um den Spiegel 4.

Der in Figur 3 gezeigte nicht erfindungsgemäße Rückspiegel 1 weist eine dreieckige Leuchte 5 auf, die in dem Spiegelarm 2 angeordnet ist und entsprechend einem Warndreieckt ausgebildet ist. Die Ausrichtung der Leuchte 5 gegenüber dem Spiegel 4 erfolgt mittels eines entsprechenden Spiels an dem ersten freien Ende 21. Eine weitere Möglichkeit ist eine Änderung der Anordnung des Spiegels 4 in dem Gehäuse 3. Hierbei ist der Spiegel 4 derart in dem Gehäuse 3 aufgenommen, dass dieser ein für die Ausrichtung ausreichendes Spiel in dem Gehäuse 3 aufweist, ohne die Funktion des Spiegels während einer Fahrt zu beeinträchtigen.

## Patentansprüche

1. Rückspiegel (1) für ein einspuriges Kraftfahrzeug mit einem Spiegelarm (2) und einem Gehäuse (3), wobei ein erstes freies Ende (21) des Spiegelarms (2) zur Befestigung des Rückspiegels (1) an einem einspurigen Kraftfahrzeug ausgebildet ist und das Gehäuse (3) an einem zweiten freien Ende (22) des Spiegelarms (2) angeordnet ist, wobei in dem Gehäuse (3) ein Spiegel (4) angeordnet ist und wobei der Rückspiegel (1) elektrifiziert ist und eine Leuchte (5) umfasst,
wobei an dem Rückspiegel (1) eine Schnittstelle (6) für ein Steuergerät (7) eines einspurigen Kraftfahrzeugs vorgesehen ist, wobei die Leuchte (5) mittels des Steuergeräts (7) steuerbar ist, wobei der Spiegelarm (2) zur Montage an einem Lenker eines einspurigen Kraftfahrzeugs ausgebildet ist, **dadurch gekennzeichnet, dass** die Leuchte (5) zwischen einem Außenrand des Spiegels (4) und einer Kante des Gehäuses (3) angeordnet ist und sich entlang der Kante vollständig um den Spiegel (4) erstreckt.

2. Rückspiegel (1) gemäß Anspruch 1, **dadurch gekennzeichnet, dass** die Leuchte (5) zur Erzeugung verschiedener Farben ausgebildet ist.

3. Rückspiegel (1) gemäß Anspruch 1 oder 2, **dadurch gekennzeichnet, dass** mittels der Leuchte (5) verschiedene geometrische Formen darstellbar sind.

4. Einspuriges Kraftfahrzeug mit einem Rückspiegel (1) gemäß einem der vorherigen Ansprüche und einem Steuergerät (7), in dem Daten (8) zur Steuerung der Leuchte (8) hinterlegt sind, wobei die in dem Steuergerät (7) hinterlegten Daten (8) Ein- bzw. Ausschaltbedingungen für die Leuchte (5) umfassen.

5. Einspuriges Kraftfahrzeug gemäß den Ansprüchen 2 und 4, **dadurch gekennzeichnet, dass** die in dem Steuergerät (7) hinterlegten Daten (8) eine der jeweiligen Ein- bzw. Ausschaltbedingungen zugeordnete Farbe umfasst.

6. Einspuriges Kraftfahrzeug gemäß den Ansprüchen 3 und 4 oder 5,
**dadurch gekennzeichnet, dass** die in dem Steuergerät (7) hinterlegten Daten (8) eine der jeweiligen Ein- bzw. Ausschaltbedingungen zugeordnete geometrische Form umfasst.

7. Einspuriges Kraftfahrzeug gemäß einem der Ansprüche 4 bis 6,
**dadurch gekennzeichnet, dass** die in dem Steuergerät (7) hinterlegten Daten (8) eine einer jeweiligen Ein- bzw. Ausschaltbedingung zugeordnete Dauer des Leuchtens der Leuchte (5) umfassen.

8. Einspuriges Kraftfahrzeug gemäß einem der Ansprüche 4 bis 7,
**dadurch gekennzeichnet, dass** die in dem Steuergerät (7) hinterlegten Daten (8) ein einer jeweiligen Ein- bzw. Ausschaltbedingungen zugeordnetes Intervall umfassen, das ein aufeinanderfolgendes Ein- bzw. Ausschalten der Leuchte (5) hinsichtlich einer Dauer und einer Anzahl an Wiederholungen regelt.

## Claims

1. Rear-view mirror (1) for a single-track motor vehicle having a mirror arm (2) and a housing (3), wherein a first free end (21) of the mirror arm (2) is formed for attaching the rear-view mirror (1) to a single-track motor vehicle and the housing (3) is arranged at a second free end (22) of the mirror arm (2), wherein a mirror (4) is arranged in the housing (3) and wherein the rear-view mirror (1) is electrified and comprises a lamp (5), wherein an interface (6) for a control unit (7) of a single-track motor vehicle is provided at the rear-view mirror (1), wherein the lamp (5) is controllable by means of the control unit (7), wherein the mirror arm (2) is formed for mounting to a handlebar of a single-track motor vehicle, **characterized in that** the lamp (5) is arranged between an outer periphery of the mirror (4) and an edge of the housing (3) and extends along the edge entirely around the mirror (4).

2. Rear-view mirror (1) according to Claim 1, **characterized in that** the lamp (5) is configured for producing various colours.

3. Rear-view mirror (1) according to Claim 1 or 2, **characterized in that** different geometric shapes are presentable by means of the lamp (5).

4. Single-track motor vehicle having a rear-view mirror (1) according to any of the preceding claims and having a control unit (7), in which data (8) for controlling the lamp (8) are stored, wherein the data (8) stored in the control unit (7) comprise switch-on and/or switch-off conditions for the lamp (5).

5. Single-track motor vehicle according to Claims 2 and 4, **characterized in that** the data (8) stored in the control unit (7) comprise a colour assigned to the respective switch-on or switch-off condition.

6. Single-track motor vehicle according to Claims 3 and 4 or 5, **characterized in that** the data (8) stored in the control unit (7) comprise a geometric shape assigned to the respective switch-on or switch-off condition.

7. Single-track vehicle according to any of Claims 4 to 6, **characterized in that** the data (8) stored in the control unit (7) comprise a duration of the light emission from the lamp (5) that is assigned to a respective switch-on or switch-off condition.

8. Single-track motor vehicle according to any of Claims 4 to 7, **characterized in that** the data (8) stored in the control unit (7) comprise an interval which is assigned to a respective switch-on or switch-off condition and controls consecutive switching on and off of the lamp (5) with respect to a duration and a number of repetitions in a closed loop.

## Revendications

1. Rétroviseur (1) destiné à un véhicule à moteur monovoie, ledit rétroviseur comprenant un bras de rétroviseur (2) et un boîtier (3), une première extrémité libre (21) du bras de rétroviseur (2) étant conçue pour fixer le rétroviseur (1) à un véhicule à moteur monovoie et le boîtier (3) étant disposé à une deuxième extrémité libre (22) du bras de rétroviseur (2), un miroir (4) étant disposé dans le boîtier (3) et le rétroviseur (1) étant électrifié et comprenant une lampe (5), une interface (6) étant prévue sur le rétroviseur (1) pour une unité de commande (7) d'un véhicule à moteur monovoie, la lampe (5) pouvant être commandée au moyen de l'unité de commande (7), le bras de rétroviseur (2) étant conçu pour être monté sur un guidon d'un véhicule à moteur monovoie, **caractérisé en ce que** la lampe (5) est disposée entre une bordure extérieure du rétroviseur (4) et un bord du boîtier (3) et s'étend le long du bord tout autour du miroir (4).

2. Rétroviseur (1) selon la revendication 1, **caractérisé en ce que** la lampe (5) est conçue pour générer des couleurs différentes.

3. Rétroviseur (1) selon la revendication 1 ou 2, **caractérisé en ce que** différentes formes géométriques peuvent être représentées au moyen de la lampe (5).

4. Véhicule à moteur monovoie comprenant un rétroviseur (1) selon l'une des revendications précédentes et une unité de commande (7) dans laquelle sont stockées des données (8) destinées à commander la lampe (8), les données (8) stockées dans l'unité de commande (7) comprenant des conditions d'allumage et d'extinction de la lampe (5).

5. Véhicule à moteur monovoie selon les revendications 2 et 4, **caractérisé en ce que** les données (8) stockées dans l'unité de commande (7) comportent une couleur associée aux conditions d'allumage ou d'extinction respectives.

6. Véhicule à moteur monovoie selon les revendications 3 et 4 ou 5, **caractérisé en ce que** les données (8) stockées dans l'unité de commande (7) comprennent une forme géométrique associée aux conditions d'allumage ou d'extinction respectives.

7. Véhicule à moteur monovoie selon l'une des revendications 4 à 6, **caractérisé en ce que** les données (8) stockées dans l'unité de commande (7) comprennent une durée d'éclairement de la lampe (5) qui est associée à une condition d'allumage ou d'extinction respective.

8. Véhicule à moteur monovoie selon l'une des revendications 4 à 7, **caractérisé en ce que** les données (8) stockées dans l'unité de commande (7) comprennent un intervalle qui est associé à une condition d'allumage ou d'extinction respective et qui régule un allumage ou une extinction successif de la lampe (5) en fonction d'une durée et d'un nombre de répétitions.
